# EUROPEAN PATENT SPECIFICATION

(11) **EP 4 095 379 B1**
(45) Date of publication and mention of the grant of the patent: **14.02.2024**
(21) Application number: 22173392.6
(22) Date of filing: 13.05.2022
(51) Int. Cl.: F04B 35/01, F04B 39/12

(54) **FIXING DEVICE OF MOTOR OF AIR COMPRESSOR**
BEFESTIGUNGSVORRICHTUNG FÜR DEN MOTOR EINES LUFTKOMPRESSORS
DISPOSITIF DE FIXATION DE MOTEUR DE COMPRESSEUR D'AIR

(30) Priority: 24.05.2021 TW 110118731
(43) Date of publication of application: 30.11.2022
(73) Proprietor: Chou, Wen-San, Tainan City (TW); Chou, Cheng-Hsien, Tainan City (TW)
(72) Inventor: Chou, Wen-San, Tainan City (TW); Chou, Cheng-Hsien, Tainan City (TW)
(74) Representative: Becker Kurig & Partner Patentanwälte mbB

(56) References cited:
- EP-A1- 3 670 911
- CN-U- 206 283 384
- KR-A- 20180 061 540
- US-A1- 2018 223 824
- US-A1- 2020 208 620

## Description

### FIELD OF THE INVENTION

The present invention relates to a fixing device of a motor of an air compressor.

### BACKGROUND OF THE INVENTION

A conventional air compressor contains a body, a cylinder connected on the body, a motor fixed on the body, and a piston driven by the motor to move in the cylinder reciprocately, such that the motor actuates the piston to move in the cylinder reciprocately, thus sucking, compressing, and discharging airs. Furthermore, the air compressor is received in an accommodation box.

The motor is fixed on the body by screws, but it is easy to remove from the body after a period of using time. When the screws are inserted through the body to screw with multiple threaded orifices of a casing of the motor, a tool is difficult to screw the screws with the multiple threaded orifices in a limited space. Therefore, the motor cannot be fixed on the body by using the screws easily.

The present invention has arisen to mitigate and/or obviate the afore-described disadvantages.

From patent application publications US 2020/0208620 A1 and EP 3670911 A1 air compressors are known having the features of the preamble of claim 1. Further air compressors are described in patent application publications KR 10-2018-0061540 A and US 2018/0223824 A1 and in utility model publication CN 206283384 U.

### SUMMARY OF THE INVENTION

The present invention provides an air compressor having the features of claim 1. Further embodiments are subject-matter of the dependent claims.

The air compressor comprises an accommodation box, the motor includes multiple coupling orifices defined thereon and configured to engage on the multiple posts of the body, and the motor further includes at least one locking extension configured to engage with the body, thus connecting the motor on the body securely without using any screws.

Further aspect of the present invention is to provide a fixing device of a motor of an air compressor by which the motor is removed from the body by using a removal tool, and the removal tool is configured to press the at least one locking extension away from the body, thus removing the motor from the body easily and quickly.

With the air compressor according to the present invention two abutting portions are formed on an inner wall of a first casing and an inner wall of a second casing of the accommodation box, and the two abutting portions are two protrusions of the accommodation box configured to define two flexible wings of the two locking extensions between the motor and the body, hence the air compressor is received in the accommodation box stably by using the two flexible wings of the two locking extensions.

### BRIEF DESCRIPTION OF THE DRAWINGS

FIG. 1 is a partially perspective view showing the exploded components of a fixing device of a motor of an air compressor that does not form part of the invention, but whose depiction is useful for understanding the invention.
FIG. 2 is another partially perspective view showing the exploded components of the fixing device of the motor of the air compressor according to FIG. 1.
FIG. 3 is a partially side plan view showing the exploded components of the fixing device of the motor of the air compressor according to FIG. 1.
FIG. 4 is a partially cross-sectional view showing the exploded components of the fixing device of the motor of the air compressor according to FIG. 1.
FIG. 5 is a partially cross-sectional view showing the operation of the fixing device of the motor of the air compressor according to FIG. 1.
FIG. 6 is a cross sectional view showing the operation of the fixing device of the motor of the air compressor according to FIG. 1.
FIG. 7 is a partially perspective view showing the exploded components of an air compressor according to an embodiment of the present invention.
FIG. 8 is a partially perspective view showing the exploded components of the fixing device of the motor of the air compressor according to the embodiment of the present invention.
FIG. 9 is an amplified cross-sectional view of a part of FIG. 8.
FIG. 10 is a perspective view showing the operation of the air compressor according to the embodiment of the present invention.
FIG. 11 is a cross sectional view showing the operation of the air compressor according to the embodiment of the present invention.

### DETAILED DESCRIPTION OF A PREFERRED EMBODIMENT

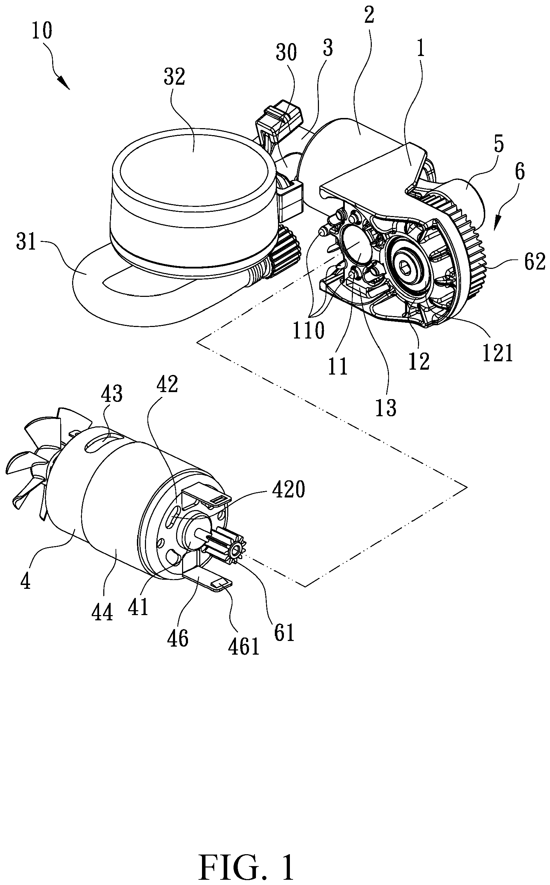

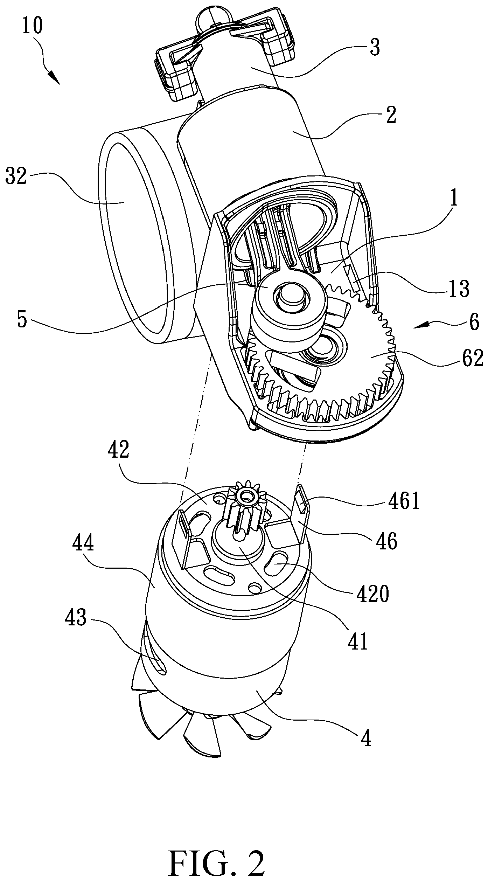

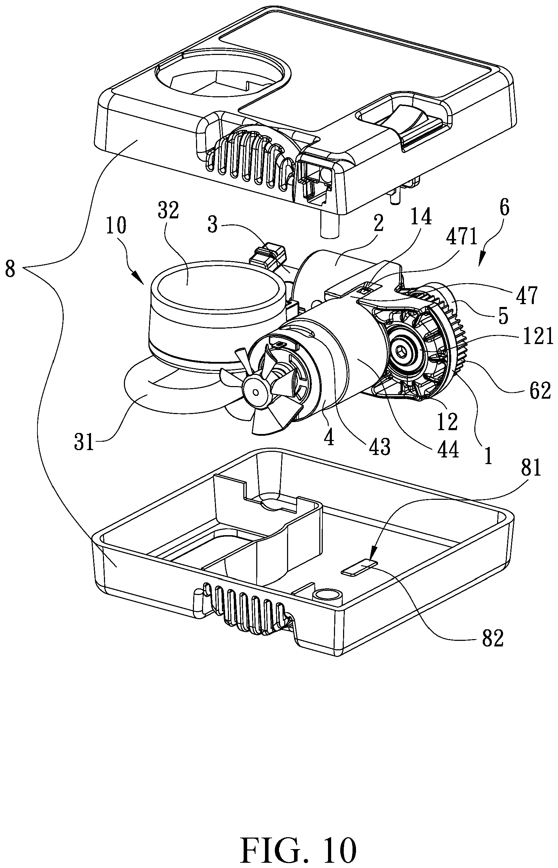

With reference to FIG. 10, an air compressor 10 is received in an accommodation box 8. Referring to FIGS. 1 and 2, the air compressor 10 comprises a body 1, a cylinder 2 connected on the body 1, a motor 4 fixed on the body 1, and a piston 5 driven by the motor 4 to move in the cylinder 2 reciprocately.

The body 1 includes multiple positioning orifices which are a first positioning orifice 11 and a second positioning orifice 12, wherein a small gear 61 is received in the first positioning orifice 11 and is connected on an end of the motor 4, and a connection seat 41 of the motor 4 is accommodated in the first orifice 11. The second positioning orifice 12 is configured to receive a bearing 121. The motor 4 further includes two dissipation holes 43 symmetrically formed on an outer wall of the casing thereof and configured to circulate airs and to dissipate heat from the motor 4. The motor 4 includes a magnetic coil 44 fitted thereon and made of metal material so as to guide magnetism efficiently, when the motor 4 operates.

The cylinder 2 is one-piece connected on the body 1 and is in communication with an air storage holder 3, wherein the air storage holder 3 includes at least one tube 30 in which an air hose 31 and a pressure gauge 32 are received.

A transmission mechanism 6 includes a large gear 62 having a counterweight block and configured to mesh with the small gear 61, wherein the large gear 62 is connected with a bearing 121 by using a shaft (not shown), and the transmission mechanism 6 actuates the piston 5 to move in the cylinder 2 reciprocately so as to produce compressed airs.

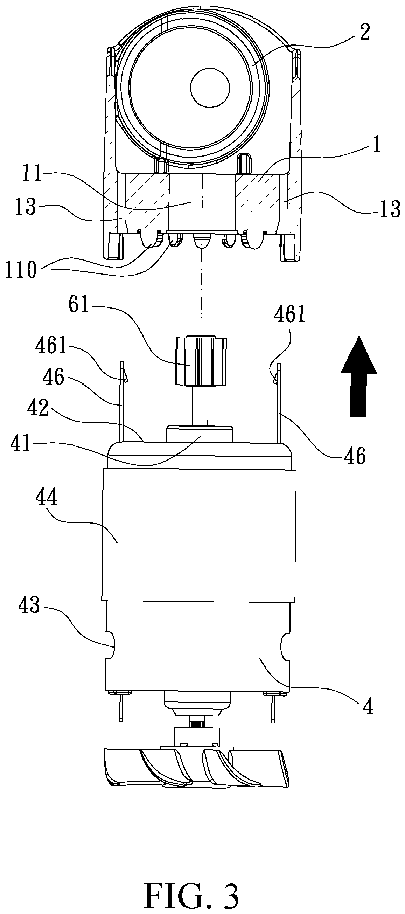

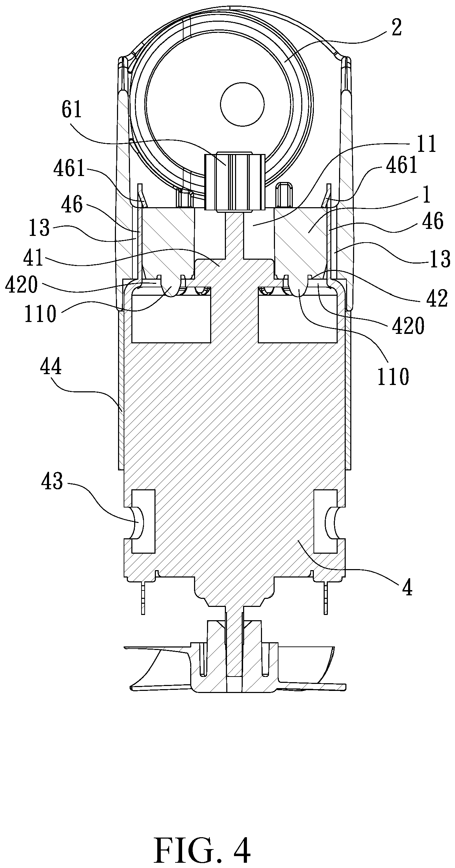

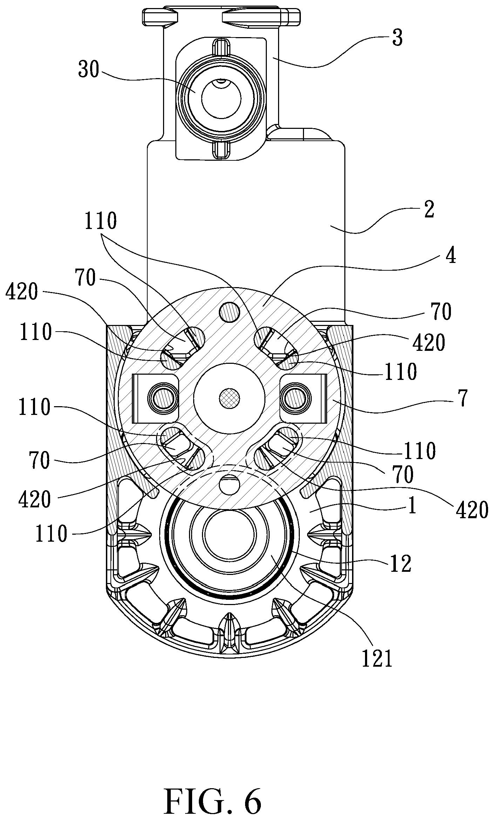

FIGS. 1-6 depict an air compressor that does not form part of the invention, but whose description is useful for understanding the invention. The motor 4 includes multiple coupling orifices 420 defined on an head edge 42 thereof adjacent to small gear 61 and surrounding the connection seat 41, and the body 1 includes multiple posts 110 extending from a first outer wall thereof, surrounding the first positioning orifice 11, and corresponding to the multiple coupling orifices 420, such that when fixing the motor 4 to the body 1, the multiple coupling orifices 420 of the head edge 42 of the motor 4 are engaged on the multiple posts 110 of the body 1 so as to enhance rotating force of the motor 4 and to fix the motor 4 on the body 1 securely. Furthermore, a coupling face 7 has multiple through orifices 70 formed thereon, when the multiple posts 110 of the body 1 are engaged with the multiple coupling orifices 420 of the head edge 42 of the motor 4, as shown in FIG. 6, the connection seat 41 of the head edge 42 of the motor 1 is accommodated in the first positioning orifice 11, wherein the body 1 is engaged with the motor 4 by using two locking extensions 46, for example, a first end of a respective one locking extension 46 extends from the motor 4, and a second end of the respective one locking extension 46 is engaged on the body 1, hence the motor 4 is fixed on the body 1 securely without using any screws.

With reference to FIGS. 1-4, the two locking extensions 46 symmetrically extend from the head edge 42 of the motor 4, wherein the respective one locking extension 46 has a flexible wing 461 formed in a stamping manner, obliquely extending inward from an inner side of the respective one locking extension 46, and located away from the head edge 42. The body 1 further includes two recesses 13 passing therethrough vertically, such that two flexible wings 461 of the two locking extensions 46 are engaged on the body 1 quickly after being inserted through and forced by the two recesses 13 to deform, thus fixing the motor 4 on the body 1 without using any screws.

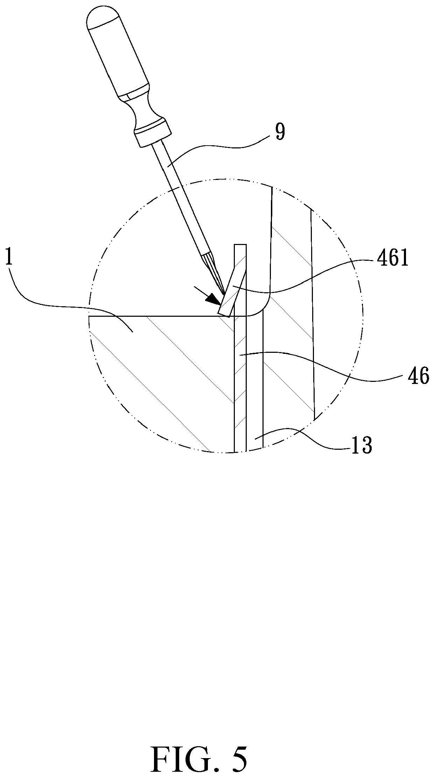

Referring further to FIG. 5, when the motor 4 is removed from the body 1 by ways of a removal tool 9, the flexible wing 461 of the respective one locking extension 46 is pressed by the removal tool 9 to detach from the body 1, and the motor 4 is removed from the body 1 easily and quickly, wherein the removal tool 9 is a screwdriver.

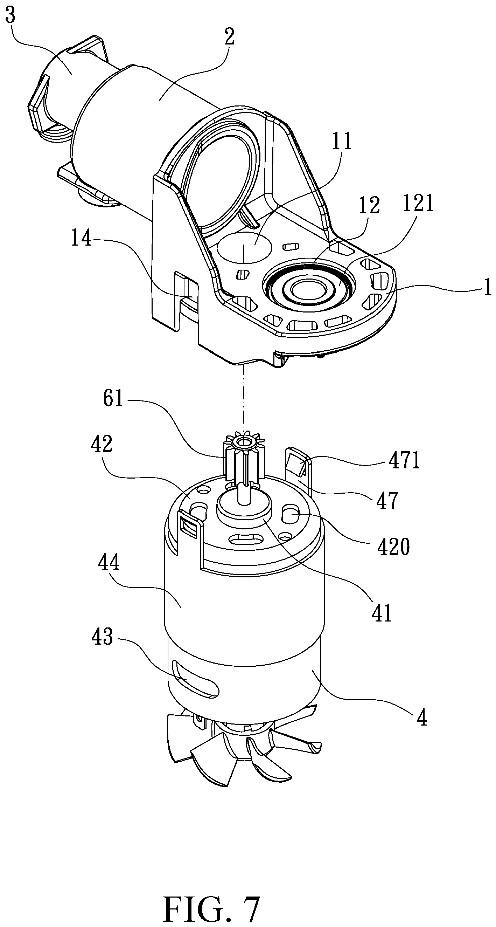

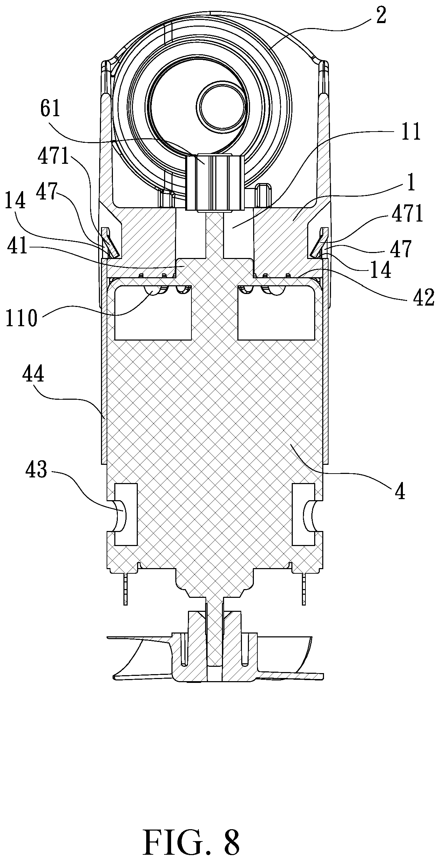

As illustrated in FIGS. 7 and 8, in a preferred embodiment, a difference from the previously described air compressor is that it comprises: the motor 4 including two locking extensions 47 symmetrically extending from the magnetic coil 44 which is fitted on the motor 4, wherein a respective one locking extension 47 has a flexible wing 471 bent inward from an inner side thereof and located away from the head edge 42, and the body 1 includes two notches 14 symmetrically defined on two sides thereof, such that the flexible wing 471 of the respective one locking extension 47 is engaged with a respective one notch 14 of the body 1, hence the motor 4 is fixed on the body 1 securely without using any screws.

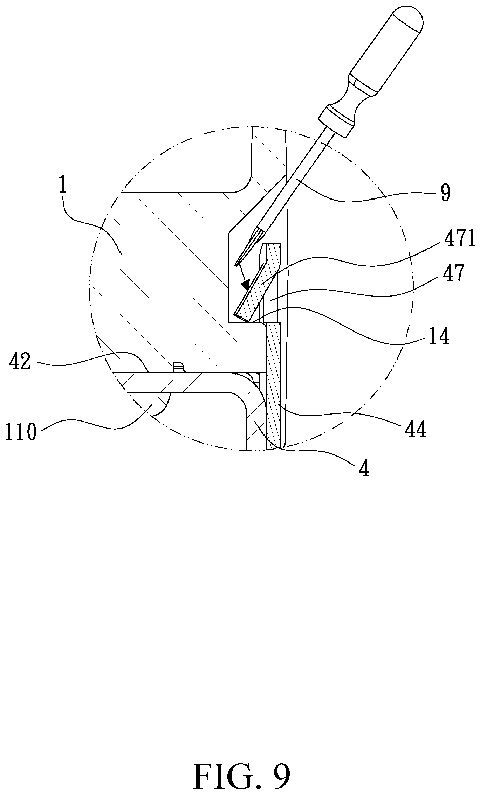

As shown in FIG. 9, the motor 4 is removed from the body 1 by ways of a removal tool 9, wherein the removal tool 9 is inserted into the respective one notch 14 of the body 1 to press the flexible wing 471 of the respective one locking extension 47 away from the respective one notch 14 of the body 1, and the motor 4 is removed from the body 1 easily and quickly.

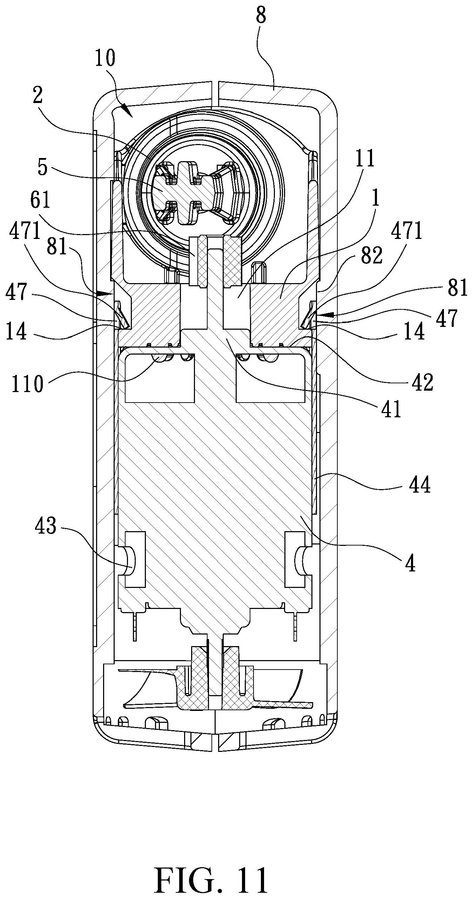

With reference to FIGS. 10 and 11, the air compressor 10 is received in the accommodation box 8, wherein two abutting portions 81 are formed on an inner wall of a first casing and an inner wall of a second casing of the accommodation box 8, and the two abutting portions 81 are two protrusions 82 of the accommodation box 8 configured to limit the two flexible wings 471 of the two locking extensions 47 between the motor 4 and the body 1, hence the air compressor 10 is received in the accommodation box 8 stably by using the two flexible wings 471 of the two locking extensions 47.

Thereby, the fixing device of the motor 4 of the air compressor 10 comprises the multiple coupling orifices 420 configured to engage on the multiple posts 110 of the body 1 so as to fix the motor 4 on the body 1 and to enhance the rotating force of the motor 4.

Preferably, the motor 4 includes at least one locking extension 46 configured to engage with the body 1, thus fixing the motor 4 on the body 1 securely without using any screws.

The air compressor 10 is received in the accommodation box 8, wherein the two abutting portions 81 are formed on the inner wall of the first casing and the inner wall of the second casing of the accommodation box 8, such that the two flexible wings 471 of the two locking extensions 47 are defined between the motor 4 and the body 1, and the air compressor 10 is received in the accommodation box 8 stably by using the two flexible wings 471 of the two locking extensions 47.

## Claims

1. An air compressor (10) comprising:
an accommodation box (8); a body (1) received in the accommodation box (8), including multiple positioning orifices which are a first positioning orifice (11) and a second positioning orifice (12);
a cylinder (2) received in the accommodation box (8), connected on the body (1) and communicating with an air storage holder (3);
a motor (4) received in the accommodation box (8), fixed on the body (1),
wherein a small gear (61) is received in the first positioning orifice (11), and a connection seat (41) of the motor (4) is accommodated in the first orifice (11),
wherein the motor (4) includes a magnetic coil (44) fitted thereon and made of metal material so as to guide magnetism efficiently, when the motor (4) operates;
a transmission mechanism (6) received in the accommodation box (8), actuating a piston (5) to move in the cylinder (2) reciprocally so as to produce compressed airs,
**characterized in that**:
the motor (4) includes two locking extension (46, 47) configured to engage the motor (4) with the body (1), a first end of a respective one locking extension (46, 47) extends from the motor (4), and a second end of the respective one locking extension (46, 47) is engaged on the body (1), hence the motor (4) is fixed on the body (1) securely without using any screws,
wherein the two locking extensions (47) symmetrically extend from the magnetic coil (44) which is fitted on the motor (4), wherein each locking extension (47) has a flexible wing (471) bent inward from an inner side thereof and located away from the head edge (42), and the body (1) includes two notches (14) symmetrically defined on two sides thereof, such that the flexible wing (471) of each of the two locking extensions (47) is engaged with a corresponding one of the two notches (14) of the body (1), hence the motor (4) is fixed on the body (1) securely without using any screws,
wherein two abutting portions (81) are formed on an inner wall of a first casing and an inner wall of a second casing of the accommodation box (8), and the two abutting portions (81) are two protrusions (82) of the accommodation box (8) respectively configured to limit the two flexible wings (471) of the two locking extensions (47) between the motor (4) and the body (1), hence the air compressor (10) is received in the accommodation box (8) stably by using the two flexible wings (471) of the two locking extensions (47).

2. The air compressor (10) as claimed in claim 1, **characterized in that** the motor (4) further includes two dissipation holes (43) symmetrically formed on an outer wall of the casing thereof and configured to circulate airs and to dissipate heat from the motor (4).

3. The air compressor (10) as claimed in claim 1, **characterized in that** the motor (4) includes multiple coupling orifices (420) defined on an head edge (42) thereof adjacent to small gear (61) and surrounding the connection seat (41), and the body (1) includes multiple posts (110) extending from a first outer wall thereof, surrounding the first positioning orifice (11), and corresponding to the multiple coupling orifices (420), such that when fixing the motor (4) to the body (1), the multiple coupling orifices (420) of the head edge (42) of the motor (4) are engaged on the multiple posts (110) of the body (1) so as to enhance rotating force of the motor (4) and to fix the motor (4) on the body (1) securely.

4. The air compressor (10) as claimed in claim 3, **characterized in that** a coupling face (7) has multiple through orifices (70) formed thereon, when the multiple posts (110) of the body (1) are engaged with the multiple coupling orifices (420) of the head edge (42) of the motor (4), and the connection seat (41) of the head edge (42) of the motor (1) is accommodated in the first positioning orifice (11).

## Patentansprüche

1. Luftkompressor (10), umfassend:
ein Aufnahmegehäuse (8), einen Körper (1), der in dem Aufnahmegehäuse (8) aufgenommen ist und mehrere Positionierungsöffnungen enthält, bei denen es sich um eine erste Positionierungsöffnung (11) und eine zweite Positionierungsöffnung (12) handelt;
einen Zylinder (2), der in dem Aufnahmegehäuse (8) aufgenommen ist, mit dem Körper (1) verbunden ist und mit einem Luftspeicherhalter (3) in Verbindung steht,
einen Motor (4), der in dem Aufnahmegehäuse (8) aufgenommen ist, der an dem Körper (1) befestigt ist, wobei ein kleines Zahnrad (61) in der ersten Positionierungsöffnung (11) aufgenommen ist und ein Verbindungssitz (41) des Motors (4) in der ersten Öffnung (11) untergebracht ist, wobei der Motor (4) eine Magnetspule (44) enthält, die daran angebracht ist und aus einem Metallmaterial gefertigt ist, um Magnetismus effizient zu leiten, wenn der Motor (4) arbeitet;
einen Übertragungsmechanismus (6), der in dem Aufnahmegehäuse (8) aufgenommen ist und einen Kolben (5) betätigt, um sich in dem Zylinder (2) hin und her zu bewegen, um Druckluft zu erzeugen,
**dadurch gekennzeichnet, dass**:
der Motor (4) zwei Verriegelungsverlängerungen (46, 47) aufweist, die so konfiguriert sind, dass sie den Motor (4) mit dem Körper (1) in Eingriff bringen, ein erstes Ende einer jeweiligen Verriegelungsverlängerung (46, 47) sich von dem Motor (4) erstreckt und ein zweites Ende der jeweiligen einen Verriegelungsverlängerung (46, 47) mit dem Körper (1) in Eingriff steht, so dass der Motor (4) ohne Verwendung von Schrauben sicher an dem Körper (1) befestigt ist,
wobei sich die beiden Verriegelungsverlängerungen (47) symmetrisch von der Magnetspule (44) erstrecken, die an dem Motor (4) angebracht ist, wobei jede Verriegelungsverlängerung (47) einen flexiblen Flügel (471) aufweist, der von einer Innenseite davon nach innen gebogen und von der Kopfkante (42) entfernt angeordnet ist, und der Körper (1) zwei Kerben (14) aufweist, die symmetrisch auf zwei Seiten davon definiert sind, so dass der flexible Flügel (471) jeder der beiden Verriegelungsverlängerungen (47) mit einer entsprechenden der beiden Kerben (14) des Körpers (1) in Eingriff steht, so dass der Motor (4) sicher auf dem Körper (1) befestigt ist, ohne irgendwelche Schrauben zu verwenden, wobei zwei Anschlagabschnitte (81) an einer Innenwand eines ersten Gehäuses und einer Innenwand eines zweiten Gehäuses des Aufnahmegehäuses (8) ausgebildet sind und die beiden Anschlagabschnitte (81) zwei Vorsprünge (82) des Aufnahmegehäuses (8) sind, die jeweils so gestaltet sind, dass sie die beiden flexiblen Flügel (471) der beiden Verriegelungsverlängerungen (47) zwischen dem Motor (4) und dem Körper (1) begrenzen, wodurch der Luftkompressor (10) durch die beiden flexiblen Flügel (471) der beiden Verriegelungsverlängerungen (47) stabil in dem Aufnahmegehäuse (8) aufgenommen wird.

2. Luftkompressor nach Anspruch 1, **dadurch gekennzeichnet, dass** der Motor (4) ferner zwei Ableitungslöcher (43) aufweist, die symmetrisch an einer Außenwand seines Gehäuses ausgebildet und so konfiguriert sind, dass sie Luft zirkulieren und Wärme vom Motor (4) ableiten.

3. Luftkompressor nach Anspruch 1, **dadurch gekennzeichnet, dass** der Motor (4) mehrere Kupplungsöffnungen (420) enthält, die an einer Kopfkante (42) davon angrenzend an ein kleine Zahnrad (61) definiert sind und den Verbindungssitz (41) umgeben, und dass der Körper (1) mehrere Pfosten (110) enthält, die sich von einer ersten Außenwand davon aus erstrecken und die erste Positionierungsöffnung (11) umgeben, und mit den mehrfachen Kupplungsöffnungen (420) korrespondieren, so dass beim Befestigen des Motors (4) an dem Körper (1) die mehrfachen Kupplungsöffnungen (420) der Kopfkante (42) des Motors (4) in die mehrfachen Pfosten (110) des Körpers (1) eingreifen, um die Drehkraft des Motors (4) zu erhöhen und den Motor (4) sicher an dem Körper (1) zu befestigen.

4. Luftkompressor nach Anspruch 3, **dadurch gekennzeichnet, dass** eine Kupplungsfläche (7) mehrere darauf ausgebildete Durchgangsöffnungen (70) aufweist, wenn die mehreren Pfosten (110) des Körpers (1) mit den mehreren Kupplungsöffnungen (420) der Kopfkante (42) des Motors (4) in Eingriff stehen, und der Verbindungssitz (41) der Kopfkante (42) des Motors (1) in der ersten Positionierungsöffnung (11) untergebracht ist.

## Revendications

1. Un compresseur d'air (10) comprenant :
une boîte de logement (8) ;
un corps (1) reçu dans la boîte de logement (8), comprenant une pluralité d'orifices de positionnement qui sont un premier orifice de positionnement (11) et un deuxième orifice de positionnement (12) ;
un cylindre (2) reçu dans la boîte de logement (8), relié au corps (1) et communiquant avec un support (3) de stockage d'air ;
un moteur (4) reçu dans la boîte de logement (8), fixé sur le corps (1), une petite roue dentée (61) étant reçue dans le premier orifice de positionnement (11), et un siège de connexion (41) du moteur (4) étant logé dans le premier orifice (11), le moteur (4) comprenant une bobine magnétique (44) montée sur lui et réalisée en matériau métallique de manière à guider efficacement le magnétisme, lorsque le moteur (4) fonctionne ;
un mécanisme de transmission (6) reçu dans la boîte de logement (8), actionnant un piston (5) de façon à le déplacer dans le cylindre (2) en va-et-vient de manière à produire de l'air comprimé,
**caractérisé en ce que** :
le moteur (4) comprend deux extensions de verrouillage (46, 47) configurées pour mettre le moteur (4) en engagement avec le corps (1), une première extrémité d'une extension de verrouillage respective (46, 47) s'étend à partir du moteur (4), et une deuxième extrémité de l'extension de verrouillage respective (46, 47) est engagée sur le corps (1), de sorte que le moteur (4) soit fixé sur le corps (1) de manière sécurisée sans utiliser de vis,
les deux extensions de verrouillage (47) s'étendant symétriquement à partir de la bobine magnétique (44) qui est montée sur le moteur (4), chaque extension de verrouillage (47) ayant une aile flexible (471) courbée vers l'intérieur depuis un côté intérieur de celle-ci et située à l'écart du bord de tête (42) et le corps (1) comprend deux encoches (14) définies symétriquement sur deux côtés de lui-même, de telle sorte que l'aile flexible (471) de chaque extension parmi les deux extensions de verrouillage (47) soit en engagement avec une, correspondante, des deux encoches (14) du corps (1), le moteur (4) étant ainsi fixé solidement sur le corps (1) sans utiliser de vis,
deux parties contiguës (81) étant formées sur une paroi interne d'un premier carter et une paroi interne d'un deuxième carter de la boîte de logement (8), et les deux parties contiguës (81) sont deux saillies (82) de la boîte de logement (8) configurés chacune pour limiter les deux ailes flexibles (471) des deux extensions de verrouillage (47) entre le moteur (4) et le corps (1), de sorte que le compresseur d'air (10) soit reçu dans la boîte de logement (8) de manière stable en utilisant les deux ailes flexibles (471) des deux extensions de verrouillage (47).

2. Le compresseur d'air (10) selon la revendication 1, **caractérisé en ce que** le moteur (4) comprend en outre deux trous de dissipation (43) formés symétriquement sur une paroi externe de son boîtier et configurés pour faire circuler des airs et dissiper la chaleur du moteur (4).

3. Le compresseur d'air (10) selon la revendication 1, **caractérisé en ce que** le moteur (4) comprend une pluralité d'orifices de liaison (420) définis sur un bord de tête (42) de celui-ci adjacent à une petite roue dentée (61) et entourant le siège de connexion (41), et le corps (1) comprend de multiples montants (110) s'étendant à partir d'une première paroi externe de celui-ci, entourant le premier orifice de positionnement (11), et correspondant à la pluralité d'orifices de liaison (420), de telle sorte que, lors de la fixation du moteur (4) au corps (1), les orifices de la pluralité d'orifices de liaison (420) du bord de tête (42) du moteur (4) soient engagés sur la pluralité de montants (110) du corps (1) de manière à favoriser la force de rotation du moteur (4) et à fixer solidement le moteur (4) sur le corps (1).

4. Le compresseur d'air (10) selon la revendication 3, **caractérisé en ce qu'**une face de liaison (7) présente une pluralité d'orifices traversants (70) formés sur elle, lorsque les montants de la pluralité de montants (110) du corps (1) sont en engagement avec la pluralité d'orifices de liaison (420) du bord de tête (42) du moteur (4), et le siège de connexion (41) du bord de tête (42) du moteur (1) est logé dans le premier orifice de positionnement (11).
